Europäisches Patentamt

European Patent Office

Office européen des brevets

(19)

(11) Veröffentlichungsnummer: **0 204 138**

**A1**

(12) **EUROPÄISCHE PATENTANMELDUNG**

(21) Anmeldenummer: **86105820.4**

(22) Anmeldetag: **29.04.86**

(51) Int. Cl.⁴: **A 23 L 3/04**
**A 23 L 3/02**

(30) Priorität: **29.04.85 IT 3419**

(43) Veröffentlichungstag der Anmeldung:
**10.12.86 Patentblatt 86/50**

(84) Benannte Vertragsstaaten:
**AT BE CH DE FR GB IT LI LU NL SE**

(71) Anmelder: **SIMONAZZI A. & L. S.p.A.**
**Via la Spezia 241/A**
**I-43016 Parma(IT)**

(72) Erfinder: **Simonazzi, Adriano, Dr.**
**Via la Spezia n. 241a**
**I-43016 Parma(IT)**

(74) Vertreter: **Beszédes, Stephan G. Dr.**
**Münchener Strasse 80a Postfach 1168**
**D-8060 Dachau(DE)**

(54) Verfahren un Vorrichtung zum Pasteurisieren von Lebensmitteln.

(57) Zur Vermeidung einer Überhitzung von zu pasteurisierenden Lebensmitteln wird in einem Pasteurisierungstunnel (10) bei Überschreiten eines Sicherheitsgrenzwertes der Hauptbesprühungsfluß automatisch unterbrochen und gleichzeitig ein Besprühungssystem (12-23) mit Umwälzfluid aktiviert, das aus Drainagewannen (30) in den Bereichen entnommen wird, in welchen das Fluid eine Temperatur aufweist, die auch bei längerer Einwirkung für den Behälterinhalt unschädlich ist.

FIG. 3

EP 0 204 138 A1

Beschreibung

Die Erfindung betrifft ein Verfahren zum Pasteurisieren von Lebensmitteln, wobei Behälter mit den Lebensmitteln in einem Pasteurisierungstunnel mit einem erwärmten Fluid besprüht werden, sowie eine Vorrichtung zum Pasteurisieren von Lebensmitteln mit einem Pasteurisierungstunnel, in welchem Sprühvorrichtungen für ein erwärmtes Fluid angeordnet sind.

Beim Pasteurisieren von Lebensmitteln ist darauf zu achten, daß die Temperatur, bei welcher das Pasteurisieren durchgeführt wird, einen Höchstwert nicht überschreitet, da dann die sensorischen Eigenschaften verändert und die essentiellen Bestandteile der Lebensmittel zerstört werden würden.

Es sind Systeme für die Notsteuerung der Temperatur von Behältern, in welchen Lebensmittel enthalten sind, bekannt, die länger in einem Pasteurisierungstunnel verbleiben. Bei allen bekannten Systemen wird Wasser zugeführt, das aus einer Kaltwasserquelle in der Versorgungswanne des Hauptsprühsystems, das stets in Betrieb bleibt, entnommen wird. Bei diesen Systemen ist nachteilig, daß eine Abkühlung der Wassermenge erforderlich ist, die eigentlich für das Erreichen der Betriebstemperatur vorgesehen ist und die bei Beginn der Notmaßnahme in dem Hauptsystem vorhanden ist. Dies bedeutet eine Verzögerung für die Einwirkung des kühlen Wassers und eine Energievergeudung, da das Wasser des Hauptsystems zunächst erhitzt und dann abgekühlt wird, ohne für die Pasteurisierung benutzt werden zu können. Als Alternative dazu muß eine Kaltwasserquelle bereitgestellt werden. Ferner ist bei den bekannten Systemen von Nachteil, daß bei der Wiederherstellung normaler Betriebsbedingungen Verzögerungen auftreten und ein erneuter Energieverlust erfolgt.

Der Erfindung liegt die Aufgabe zugrunde, ein Verfahren und eine Vorrichtung zum Pasteurisieren von Lebensmitteln zu schaffen, bei welchen ohne zusätzlichen Energieaufwand eine

unverzügliche Steuerung bei Überschreiten eines Höchsttemperaturgrenzwertes erfolgen kann.

Diese Aufgabe wird erfindungsgemäß dadurch gelöst, daß der
Hauptbesprühungsfluß bei einer Temperatur oberhalb eines
Sicherheitsgrenzwertes automatisch unterbrochen und gleichzeitig ein Besprühungssystem mit Umwälzfluid aktiviert wird,
das aus Drainagewannen in den Bereichen entnommen wird, in
welchen das Fluid eine Temperatur aufweist, die auch bei
längerer Einwirkung für den Behälterinhalt unschädlich ist.

Eine Vorrichtung, die insbesondere geeignet ist zur Durchführung des erfindungsgemäßen Verfahrens, ist gekennzeichnet
durch eine Vorrichtung zum Unterbrechen des Hauptbesprühungsflusses, wenn das Fluid eine Temperatur oberhalb eines
Sicherheitsgrenzwertes aufweist, und durch ein gleichzeitig
aktivierbares Besprühungssystem, welches durch Umwälzwasser versorgt wird, das aus Drainagewannen in den Bereichen des Tunnels entnommen wird, in denen das Besprühungsfluid Temperaturwerte aufweist, die auch bei längerer Einwirkung keinen Schaden an dem Lebensmittel verursachen.

Die Erfindung besteht darin, daß der Hauptfluß des Besprühungssystems sofort unterbrochen wird, wenn die Temperaturen einen Sichtheitsgrenzwert überschreiten, und darin,
daß gleichzeitig ein Besprühungssystem aktiviert wird,
das automatisch mit Umwälzwasser versorgt wird, welches
aus Drainagewannen in Bereichen des Pasteurisierungstunnels
entnommen wird, in denen die Temperatur des Besprühungsfluids nicht so hoch ist, daß an den in den Behältern vorhandenen Lebensmitteln Schäden eintreten können, wenn sie
dieser Temperatur längere Zeit ausgesetzt sind, d.h., daß
die entsprechende Temperatur des Besprühungsfluids unterhalb des Sicherheitsgrenzwertes liegt.

Die Erfindung wird nachstehend anhand von Ausführungsbeispielen näher erläutert. Es zeigen:

- 3 -

Fig. 1   ein Zeit/Temperatur-Diagramm eines normalen
Pasteurisierungsprozesses von Lebensmitteln, die
durch einen Pasteurisierungstunnel geführt werden,

Fig. 2   einen Spitzentemperaturwert, der während eines
verlängerten Aufenthalts von Lebensmitteln im
Pasteurisierungstunnel abgesenkt wird,und

Fig. 3   ein Ausführungsbeispiel eines Sprühsystems in
einem Pasteurisierungstunnel.

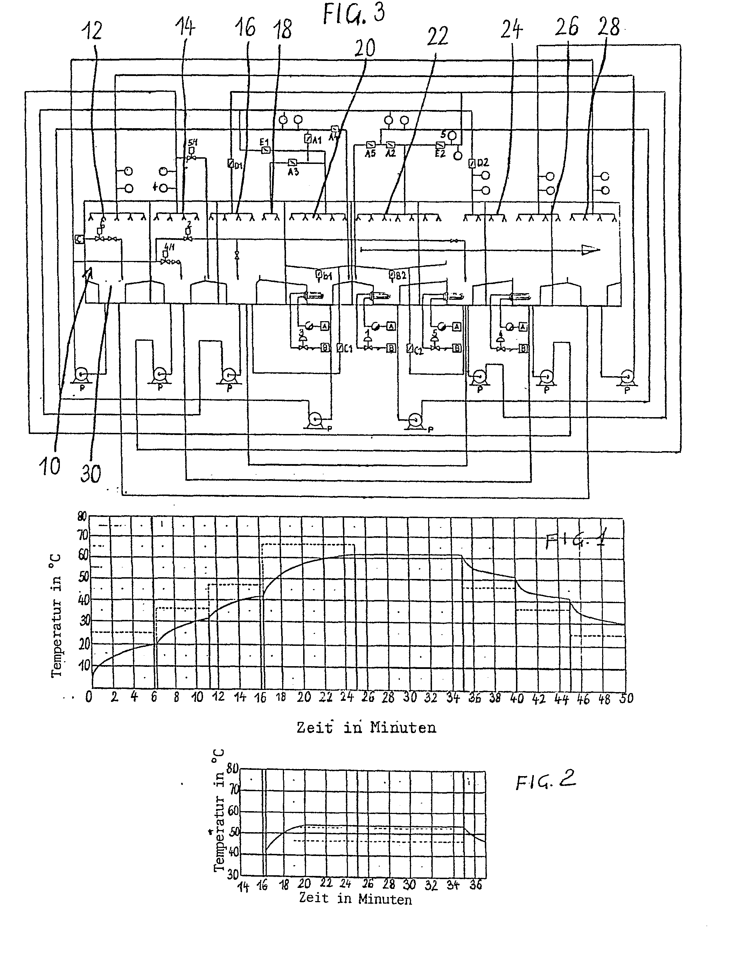

Fig. 3 zeigt im Längsschnitt einen Pasteurisierungstunnel
10, in welchem unabhängig voneinander betätigbare Sprühsysteme 12, 14, 16, 18, 20, 22, 24, 26 und 28 angeordnet
sind. Ein in       Behälter eingefülltes Lebensmittel wird
auf seinem Weg durch den Tunnel nacheinander diesen Besprühungssystemen 12 bis 28 ausgesetzt. Aus Fig. 1 ist das
Zeit/Temperatur-Diagramm zu ersehen, welches sich für das
durch den Tunnel geführte Lebensmittel ergibt, wenn es
mit dem Fluid aus den Besprühungssystemen 12 bis 28 berieselt wird. Durch Besprühen mit den Systemen 12 bis 16
erfolgt eine Vorerwärmung, durch die Besprühungssysteme
18 bis 22 das Erwärmen der Lebensmittel auf die Pasteurisierungstemperatur und durch die Systeme 24 bis 28 ein
Absenken der Temperatur der Lebensmittel. Wenn die durch die
Besprühungssysteme 18 bis 22 erwirkte Temperatur bei zu
langem Aufenthalt des Lebensmittels in dem Tunnel zu hoch
wird, muß eine schnelle Absenkung der Temperatur erfolgen,
damit das Lebensmittel keinen Schaden erleidet. Eine unterhalb eines Sicherheitsgrenzwertes abgesenkte Temperatur über
die Zeit ist Fig. 2 zu entnehmen.

Um eine schnelle Temperaturabsenkung zu erreichen, wird der
Hauptfluß des Besprühungssystems unterbrochen und gleichzeitig ein Besprühungssystem aktiviert, das automatisch
mit Umwälzwasser  versorgt wird, das Drainagewannen   30 am
Boden des Tunnels 10 entnommen wird, in welchen Besprühungsfluid mit einer Temperatur vorhanden ist, die unterhalb
des Sicherheitsgrenzwertes liegt.

Patentansprüche

## Patentansprüche

1. Verfahren zum Pasteurisieren von Lebensmitteln, wobei Behälter mit Lebensmitteln in einem Pasteurisierungstunnel mit einem erwärmten Fluid besprüht werden, dadurch g e k e n n z e i c h n e t , daß der Hauptbesprühungsfluß bei einer Temperatur oberhalb eines Sicherheitsgrenzwertes automatisch unterbrochen und gleichzeitig ein Besprühungssystem mit Umwälzfluid aktiviert wird, das aus Drainagewannen in den Bereichen des Tunnels entnommen wird, in welchen das Fluid eine Temperatur aufweist, die auch bei längerer Einwirkung für den Behälterinhalt unschädlich ist.

2. Vorrichtung zum Pasteurisieren von Lebensmitteln, mit einem Pasteurisierungstunnel, in welchem Sprühvorrichtungen für ein erwärmtes Fluid angeordnet sind, g e k e n n z e i c h n e t durch eine Vorrichtung zum automatischen Unterbrechen des Hauptbesprühungsflusses, wenn das Fluid eine Temperatur oberhalb eines Sicherheitsgrenzwertes aufweist, und durch ein gleichzeitig aktivierbares Besprühungssystem, welches durch Umwälz - wasser versorgt wird, das aus Drainagewannen in den Bereichen des Tunnels entnommen wird, in denen das Besprühungsfluid Temperaturwerte aufweist, die auch bei längerer Einwirkung keinen Schaden an dem Lebensmittel verursachen.

FIG. 3

FIG. 1

Temperatur in °C — Zeit in Minuten

FIG. 2

Temperatur in °C — Zeit in Minuten

0204138

14. August 1986
86105820.4

Europäisches
Patentamt

**EUROPÄISCHER RECHERCHENBERICHT**

**0204138**
Nummer der Anmeldung

EP 86 10 5820

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 441 406 (K.W. BECKER et al.)<br>* Ansprüche 1-12 *<br><br>--- | | A 23 L 3/04<br>A 23 L 3/02 |
| A | FR-A-2 520 984 (SOULE FER ET FROID S.A.)<br>* Ansprüche 1-3, Figur 1 *<br><br>----- | | |

| RECHERCHIERTE SACHGEBIETE (Int. Cl.4) |
|---|
| A 23 L 3/00 |

Der vorliegende Recherchenbericht wurde für alle Patentansprüche erstellt.

| Recherchenort | Abschlußdatum der Recherche | Prüfer |
|---|---|---|
| BERLIN | 16-07-1986 | SCHULTZE D |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82